(19) Europäisches Patentamt
European Patent Office
Office européen des brevets

(11) **EP 4 318 667 A1**

(12) **EUROPEAN PATENT APPLICATION**
published in accordance with Art. 153(4) EPC

(43) Date of publication:
**07.02.2024 Bulletin 2024/06**

(21) Application number: **22861708.0**

(22) Date of filing: **24.08.2022**

(51) International Patent Classification (IPC):
**H01M 4/525** (2010.01)     **H01M 4/505** (2010.01)
**H01M 10/052** (2010.01)     **H01M 4/02** (2006.01)

(52) Cooperative Patent Classification (CPC):
**H01M 4/02; H01M 4/505; H01M 4/525;**
**H01M 10/052;** Y02E 60/10

(86) International application number:
**PCT/KR2022/012638**

(87) International publication number:
**WO 2023/027499 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.08.2021 KR 20210112479**
           **22.08.2022 KR 20220105070**

(71) Applicant: **SM Lab Co., Ltd.**
**Ulsan 44953 (KR)**

(72) Inventor: **KIM, Jun Hyeok**
**Ulsan 44656 (KR)**

(74) Representative: **Loyer & Abello**
**9, rue Anatole de la Forge**
**75017 Paris (FR)**

(54) **POSITIVE ELECTRODE ACTIVE MATERIAL, METHOD FOR PREPARING SAME, AND LITHIUM SECONDARY BATTERY INCLUDING POSITIVE ELECTRODE COMPRISING SAME**

(57)     The disclosure relates to a positive electrode active material, a method of preparing the same, and a lithium secondary battery including the same, wherein the positive electrode active material includes a lithium transition metal oxide in which a molar ratio of a manganese (Mn) element is 0.5 or more, and a sum of molar ratios of a sodium (Na) element and a sulfur (S) element satisfies 0<Na+S<0.025.

FIG. 1A

**Description**

Technical Field

The disclosure relates to a positive electrode active material having a novel composition, a method of preparing the same, and a lithium secondary battery that includes a positive electrode including the same.

Background Art

Since lithium secondary batteries were commercialized by Sony in 1991, the demand for lithium secondary batteries has increased rapidly in various fields from small home appliances such as mobile information technology (IT) products to medium-to-large electric vehicles and energy storage systems. In particular, for medium-to-large electric vehicles and energy storage systems, a low-cost and high-energy positive electrode material is essential, but cobalt, which is a main raw material of a commercially available positive electrode active material such as monocrystalline $LiCoO_2$ (LCO), is expensive.

Recently, Ni-based positive electrode active materials such as $LiNi_xCo_yMn_zO_2$ (NCM) and $LiNi_xCo_yAl_zO_2$ (NCA), having the same structure as LCO, are being used as positive electrode active materials for medium-to-large sized secondary batteries, and the reason for this is that nickel as a raw material is less expensive and has high reversible capacity as compared with cobalt. However, since Ni-based positive electrode active materials have a maximum reversible capacity of about 240 mAh/g, there may be a limit to an increase in reversible capacity according to an increase in Ni content, and a high residual lithium content may cause a problem of deterioration in stability. Residual lithium in a positive electrode active material is electrochemically decomposed during the continuous process of charging/discharging to generate gas and forms a resistance layer on the surface of the positive electrode active material through a reaction with an electrolyte, thereby reducing lifespan characteristics. That is, in order to increase the energy density of a lithium secondary battery, it is essential to develop a next-generation positive electrode active material capable of implementing higher reversible capacity than a Ni-based positive electrode active material and implementing a low residual lithium content.

Li/Mn-rich (LMR) positive electrode active materials are solid solutions in which the structures of $Li_2MnO_3$ and $LiMO_2$ (M=transition metal) are mixed and have characteristics of implementing a high reversible capacity of 250 mAh/g or more at a high operating voltage. Unlike Ni-based positive electrode active materials, lithium may be present not only in a lithium layer in a layered structure but also in a transition metal layer, and thus higher reversible capacity may be implemented as compared with Ni-based positive electrode active materials. In addition, due to a decrease in Ni content in a positive electrode active material, a residual lithium content is lower as compared with a Ni-based positive electrode active material, resulting in improved stability of lithium secondary batteries.

However, since LMR positive electrode active materials having a secondary particle form have a porous morphology as compared with Ni-based positive electrode active materials having a secondary particle form, it is difficult to implement a high electrode density, and thus there is still a limit to an increase in energy density per volume of lithium secondary batteries. In addition, LMR positive electrode active materials have low output characteristics due to low electrical conductivity as compared with Ni-based positive electrode active materials and thus have a limitation in that it is disadvantageous to high-speed charging or discharging.

Accordingly, there is still a market demand for an LMR positive electrode active material having high electrode density and high output characteristics.

Disclosure

Technical Problem

According to an aspect, there is provided a lithium manganese-rich (LMR) positive electrode active material having improved lifespan characteristics.

Technical Solution

According to an aspect, there is provided a positive electrode active material including a lithium transition metal oxide, wherein a molar ratio of a manganese (Mn) element is 0.5 or more, and a sum of molar ratios of a sodium (Na) element and a sulfur (S) element satisfies 0<Na+S<0.025.

According to another aspect, there is provided a method of preparing a positive electrode active material including preparing a transition metal oxide precursor compound in which a molar ratio of a Mn element is 0.5 or more, mixing the transition metal oxide precursor with a Li precursor compound, a Na precursor compound, and a S precursor compound to obtain a lithium transition metal oxide precursor, and sintering the lithium transition metal oxide precursor to obtain lithium transition metal oxide particles.

According to another aspect, there is provided a lithium secondary battery including a positive electrode including the positive electrode active material, a negative electrode, and an electrolyte.

Advantageous Effects

Since a positive electrode active material according to an aspect of the disclosure has a single particle form formed of single particles having a size of several microns rather than a secondary particle form in which small primary particles having a size of hundreds of nanometers are aggregated, a shape thereof may be changed to improve the electrode density of a lithium manganese-rich (LMR) positive electrode active material. Furthermore, output characteristics are improved by substituting an Na element into a lithium site and substituting a S element into an oxygen site in the LMR positive electrode active material.

Description of Drawings

FIG. 1A shows scanning electron microscope (SEM) images of positive electrode active materials of Examples 1 to 6; FIG. 1B shows SEM images of positive electrode active materials of Comparative Examples 1 to 11;
FIG. 2 is an X-ray diffraction (XRD) graph of lithium transition metal oxide particles of Example 1 and Comparative Examples 1, 3, and 7;
FIG. 3 is an enlarged view at $2\theta = 20°$ to $26°$ in the XRD graph of FIG. 2; and
FIG. 4 is a schematic view of a lithium battery according to an embodiment.

[Description of reference numerals]

| 1: | lithium battery | 2: | negative electrode |
|----|-----------------|----|--------------------|
| 3: | positive electrode | 4: | separator |
| 5: | battery case | 6: | cap assembly |

Best Mode

Mode for Invention

Hereinafter, as the present inventive concept allows for various changes and numerous embodiments, specific embodiments will be illustrated in the drawings and described in detail in the written description. However, this is not intended to limit the present inventive concept to particular modes of practice, and it is to be appreciated that all changes, equivalents, and substitutes that do not depart from the spirit and technical scope are encompassed in the present inventive concept.

The terms used herein are merely used to describe specific embodiments and are not intended to limit the present inventive concept. An expression used in the singular encompasses the expression of the plural, unless it has a clearly different meaning in the context. As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "I" used herein may be interpreted as "and" or "or" according to the context.

In the drawings, the thicknesses of layers and regions are exaggerated or reduced for clarity. Like reference numerals in the drawings denote like elements throughout the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

Hereinafter, a positive electrode active material, a method of preparing the same, and a lithium secondary battery that includes a positive electrode including the same according to embodiments will be described in more detail.

A positive electrode active material according to an embodiment may include a lithium transition metal oxide, wherein a molar ratio of a manganese (Mn) element is 0.5 or more, and the sum of molar ratios of a sodium (Na) element and a sulfur (S) element satisfies 0<Na+S<0.025.

In order to implement a high electrode density and suppress crack formation inside particles, research on lithium manganese-rich (LMR) positive electrode active materials in the form of single particles has recently been actively conducted. However, in order to develop an LMR positive electrode active material for a high-energy lithium secondary battery, it is essential to change a particle form and also stabilize an unstable structure inside particles. An LMR positive electrode active material generally includes a $LiMO_2$ compound having an R-3m crystal structure and a $Li_2MnO_3$ compound having a monoclinic crystal structure. A $Li_2MnO_3$ structure may be activated in a first cycle to assist in obtaining high capacity. However, in order to activate the $Li_2MnO_3$ structure, a high voltage of 4.4 V or more is required, which causes the desorption of Li ions and oxygen in a crystal structure to form an electrochemically inactive phase, resulting in rapid decreases in lifespan and energy density. Accordingly, there is still a need for a single-particle LMR positive electrode active material of which a structure is stabilized during charging/discharging by bonding with oxygen or lithium through doping or coating in a structure.

Since the positive electrode active material according to an aspect of the present invention has a single particle form rather than a secondary particle form formed through aggregation of LMR positive electrode active material primary particles of a related art, there may be no particle breakage due to rolling during an electrode formation process, and a high-density active material layer may be formed, thereby achieving a high electrode density. Furthermore, by substituting a Na element into a lithium site and substituting a S element into an oxygen site in the LMR positive electrode active material, unstable Mn ions inside particles are stabilized, thereby increasing capacity per unit volume and improving output characteristics. Specifically, since the sum of the molar ratios of the sodium (Na) element and the sulfur (S) element satisfies 0<Na+S<0.025, the stability of a crystal is improved during a charging or discharging process of a secondary battery, thereby improving cycle characteristics.

According to an embodiment, an X-ray diffraction spectrum of the lithium transition metal oxide may satisfy Expression 1 below:

## Expression 1

$$10 \leq \text{crystal grain (020)/crystal grain (110)} \leq 15$$

Here, the crystal grain (110) refers to a crystallite size on a crystal plane (110), and the crystal grain (020) refers to a crystallite size on a crystal plane (020).

The crystallite size was calculated through quantitative analysis using a Scherrer equation. Specifically, the crystallite size was analyzed by using a full width at half maximum (FWHM). In $FWHM=K\lambda/Lcos\Theta$, FWHM denotes a full width at half maximum of a specific peak, K denotes a shape factor constant, $\lambda$ denotes a wavelength used for X-ray diffraction analysis, and $\Theta$ denotes a number of a peak position expressed in radians. In addition, L denotes a crystallite size. A crystallite size may be represented by a formula of $L=K\lambda/(cos\Theta*FWHM)$.

The lithium transition metal oxide according to an embodiment of the present invention satisfies Expression 1, but a value of crystal grain (020)/crystal grain (110) of Expression 1 is a low value of less than 10 in polycrystalline or amorphous particles. It is thought to be because, as in the lithium transition metal oxide of the present invention, a $Li_2MnO_3$ crystal phase has structural stability while Na and S are doped into a structure in a specific content range, and a crystallite size is large at a crystal plane (020) peak according to growth. In addition, the lithium transition metal oxide of the present invention including a relatively stable $Li_2MnO_3$ phase may be electrochemically stable during charging or discharging, resulting in improved lifespan characteristics.

According to an embodiment, in the lithium transition metal oxide, a molar ratio of a Co element may be 0.01 or less. For example, in the lithium transition metal oxide, the molar ratio of the Co element may be 0.009 or less, 0.008 or less, 0.007 or less, 0.006 or less, 0.005 or less, 0.004 or less, 0.003 or less, 0.002 or less, 0.001 or less, or 0. Here, when the molar ratio of the Co element is 0, it means that the lithium transition metal oxide does not contain the Co element.

According to an embodiment, in the lithium transition metal oxide, the molar ratio of the Mn element may be greater than 0.5. For example, in the lithium transition metal oxide, the molar ratio of the Mn element may be 0.55 or more, 0.6 or more, or 0.65 or more.

When the molar ratio of the Mn element in the lithium transition metal oxide satisfies the above range, the lithium transition metal oxide may be used for manufacturing a structurally stable and high-capacity secondary battery.

According to an embodiment, the lithium transition metal oxide may further include a Ni element. For example, the lithium transition metal oxide may include a Ni element at a molar ratio of less than 0.5, 0.45 or less, 0.4 or less, or 0.35 or less.

According to an embodiment, the lithium transition metal oxide may further include a Li element, and a molar ratio of the Li element may be greater than 1.

For example, the lithium transition metal oxide may include the Li element at a molar ratio of 1.1 or more, 1.2 or more, 1.3 or more, or 1.4 or more. In addition, the lithium transition metal oxide may include the Li element at a molar ratio of more than 1 to less than 1.5, 1.1 or more to less than 1.5, 1.2 or more to less than 1.5, 1.3 or more to less than 1.5, or 1.4 or more to less than 1.5.

When the molar ratio of the Li element in the lithium transition metal oxide satisfies the above range, structural stability may be achieved, and sufficient lithium ions may be supplied.

According to an embodiment, the lithium transition metal oxide may be represented by Formula 1 below:

$$\text{Formula 1} \qquad Li_xNa_yNi_{1-a-b}Mn_aM_bO_{2+\alpha-\beta}S_\beta$$

In Formula 1, M is at least one element selected from B, Zr, Sr, Y, Ba, W, Ti, Mg, Al, and Co, $1.3<x<1.5$, $0<y<0.015$, $0.5\leq a<1$, $0\leq b<0.1$, $0<\alpha<0.5$, and $0<\beta<0.01$.

According to an embodiment, in Formula 1, M may be B, Zr, Sr, Y, Ba, W, Ti, Mg, Al, or Co.

According to an embodiment, x may satisfy $1.35\leq x<1.5$ or $1.35\leq x\leq1.49$.

According to an embodiment, y may satisfy $0.001\leq y<0.015$.

According to an embodiment, a may satisfy $0.55\leq a<1$, $0.6\leq a<1$, or $0.65\leq a<1$.

According to an embodiment, $\alpha$ may satisfy $0<\alpha\leq0.49$, $0<\alpha\leq0.48$, or $0<\alpha\leq0.47$.

According to an embodiment, Formula 1 may be represented by any one of Formulas 1-1 to 1-10 below:

$$\text{Formula 1-1} \qquad Li_xNa_yNi_{1-a-b}Mn_aB_bO_{2+\alpha-\beta}S_\beta$$

$$\text{Formula 1-2} \qquad Li_xNa_yNi_{1-a-b}Mn_aZr_bO_{2+\alpha-\beta}S_\beta$$

$$\text{Formula 1-3} \qquad Li_xNa_yNi_{1-a-b}Mn_aY_bO_{2+\alpha-\beta}S_\beta$$

$$\text{Formula 1-4} \qquad Li_xNa_yNi_{1-a-b}Mn_aMg_bO_{2+\alpha-\beta}S_\beta$$

$$\text{Formula 1-5} \qquad Li_xNa_yNi_{1-a-b}Mn_aAl_bO_{2+\alpha-\beta}S_\beta$$

$$\text{Formula 1-6} \qquad Li_xNa_yNi_{1-a-b}Mn_aCo_bO_{2+\alpha-\beta}S_\beta$$

$$\text{Formula 1-7} \qquad Li_xNa_yNi_{1-a-b}Mn_aSr_bO_{2+\alpha-\beta}S_\beta$$

$$\text{Formula 1-8} \qquad Li_xNa_yNi_{1-a-b}Mn_aBa_bO_{2+\alpha-\beta}S_\beta$$

$$\text{Formula 1-9} \qquad Li_xNa_yNi_{1-a-b}Mn_aW_bO_{2+\alpha-\beta}S_\beta$$

$$\text{Formula 1-10} \qquad Li_xNa_yNi_{1-a-b}Mn_aTi_bO_{2+\alpha-\beta}S_\beta$$

x, y, a, b, $\alpha$, and $\beta$ in Formulae 1-1 to 1-10 are as defined above.

According to an embodiment, the lithium transition metal oxide may be represented by Formula 2 below:

$$\text{Formula 2} \qquad TLi_2MnO_3\cdot(1-T)LiNa_yNi_{1-a-b}Mn_aM_bO_{2-\beta}S_\beta$$

In Formula 2, M is at least one element selected from B, Zr, Sr, Y, Ba, W, Ti, Mg, Al, and Co, $0.3<T<0.6$, $0<x<0.015$, $0.3<a<1$, $0<b\leq0.25$, and $0<\beta\leq0.025$.

According to an embodiment, the lithium transition metal oxide may be a single particle.

"Single particle" is a concept distinguished from a secondary particle which is formed by aggregation of a plurality of particles, or a particle in which a plurality of particles are aggregated and the perimeter of the aggregate is coated. Since the lithium transition metal oxide has a form of a single particle, particles may be prevented from being broken even at a high electrode density. Therefore, a high energy density of a positive electrode active material including the lithium transition metal oxide may be implemented. In addition, as compared with secondary particles which are formed by aggregation of a plurality of single particles, breaking of particles may be suppressed during rolling, and thus a high energy density may be implemented, thereby preventing lifespan deterioration due to the breaking of the particles.

According to an embodiment, the lithium transition metal oxide may include an R-3m crystal and a monoclinic crystal.

For example, the lithium transition metal oxide may have a layered crystal structure.

According to an embodiment, the positive electrode active material may include single particles of lithium transition metal oxide particles and secondary particles formed by aggregation of a plurality of the single particles of lithium transition metal oxide particles.

According to an embodiment, in the secondary particles, a surface of the lithium transition metal oxide particles or an interface between the plurality of lithium transition metal oxide particles may include a coating layer containing a Na element, a S element, or Na and S elements.

For example, an interface at which a plurality of primary particles are in contact with each other may include a coating layer which contains a Na element, a S element, or Na and S elements. For example, the coating layer may be crystalline, quasi-crystalline, or amorphous.

According to an embodiment, an average particle diameter ($D_{50}$) of the lithium transition metal oxide may be in a range of 0.1 $\mu$m to 20 $\mu$m. For example, the average particle diameter ($D_{50}$) may be in a range of 0.1 $\mu$m to 20 $\mu$m, 1.5 $\mu$m to 15 $\mu$m, 2 $\mu$m to 15 $\mu$m, 2.5 $\mu$m to 15 $\mu$m, 2.5 $\mu$m to 10 $\mu$m, 3 $\mu$m to 10 $\mu$m, 3.5 $\mu$m to 3.5 $\mu$m 10 $\mu$m, or 4 $\mu$m to 10 $\mu$m. When the average particle diameter of the lithium transition metal oxide falls within the above range, a desired energy density per volume may be implemented. When the average particle diameter of the lithium transition metal oxide exceeds 20 $\mu$m, charge/discharge capacity is rapidly decreased, and when the average particle diameter of the lithium transition metal oxide is 0.1 $\mu$m or less, a desired energy density per volume is difficult to obtain.

Hereinafter, a method of preparing a positive electrode active material according to an aspect will be described in detail.

The method of preparing a positive electrode active material according to an embodiment includes preparing a transition metal oxide precursor compound in which a molar ratio of a Mn element is 0.5 or more;

> mixing the transition metal oxide precursor compound with a Li precursor compound, a Na precursor compound, and a S precursor compound to obtain a lithium transition metal oxide precursor; and
> sintering the lithium transition metal oxide precursor to obtain lithium transition metal oxide particles.

The lithium transition metal oxide particles may be a compound represented by any one selected from Formulae 1, 1-1 to 1-10, and 2, and the contents related thereto are as defined above.

The mixing includes mechanically mixing compounds that contains the specific elements. The mechanical mixing is performed in a dry manner. The mechanical mixing is for forming a uniform mixture by applying a mechanical force to pulverize and mix materials to be mixed. The mechanical mixing may be performed, for example, by using a mixing device such as a ball mill, a planetary mill, a stirred ball mill, or a vibrating mill which uses chemically inert beads. In this case, in order to maximize the mixing effect, a small amount of alcohol such as ethanol or higher fatty acid such as stearic acid may be selectively added.

The mechanical mixing may be performed in an oxidizing atmosphere so as to prevent the reduction of a transition metal in a transition metal source (for example, a Ni compound) and implement the structural stability of an active material.

The lithium (Li) precursor compound may include a hydrate of lithium hydroxide, lithium hydroxide, lithium oxide, lithium nitride, lithium carbonate, or a combination thereof, but one or more embodiments are not limited thereto. For example, the lithium precursor compound may be $LiOH \cdot H_2O$ or $Li_2CO_3$.

The Na precursor compound may a hydroxide, oxide, nitride, or carbonate of Na, or a combination thereof, but one or more embodiments are not limited thereto. For example, the Na precursor compound may be NaOH, $Na_2CO_3$, or a combination thereof.

The S precursor compound may include ammonium sulfate, a hydroxide, oxide, nitride, carbonate, or ammonium of S, or a combination thereof, but one or more embodiments are not limited thereto. For example, the S precursor compound may be $(NH_4)_2SO_4$.

The lithium transition metal oxide precursor compound may include a hydroxide, an oxide, a nitride, a carbonate, or a combination thereof, containing Ni and Mn elements, but one or more embodiments are not limited thereto. For example, the transition metal oxide precursor compound may be $Ni_{z1}Mn_{z2}M_{z3}(OH)_2$ (wherein $0<Z1\leq0.5$, $0.5\leq Z2<1$, $05Z3<0.1$, and M is at least one element selected from B, Zr, Sr, Y, Ba, W, Ti, Mg, Al, and Co).

According to an embodiment, the transition metal oxide precursor compound may be provided from a compound containing Ni, Mn, and M elements obtained by premixing the Ni element, Mn element, and M element.

According to another embodiment, the transition metal oxide precursor compound may be provided from a compound containing Ni and Mn elements obtained by premixing the Ni element and Mn element, and the M element may be provided from a separate M element-containing compound.

The sintering may be performed by performing heat treatment at a temperature of 900 °C to 1,100 °C for 8 hours to 12 hours.

For example, a sintering temperature may be in a range of 910 °C to 1,090 °C, 920 °C to 1,080 °C, 930 °C to 1,070 °C, 940 °C to 1,060 °C, 950 °C to 1,050 °C, 960 °C to 1,040 °C, or 970 °C to 1,030 °C, but one or more embodiments are not limited thereto. The sintering temperature includes all ranges derived by selecting any two points in the above range.

For example, the sintering may be performed for 9 hours to 11 hours or for 10 hours.

According to an embodiment, separate heat treatment may be further included after the sintering. The heat treatment and the sintering may be performed in the same chamber or different chambers.

According to an embodiment, the heat treatment may be performed at a temperature lower than the sintering temperature, for example, a temperature of 700 °C to 800 °C. A heat treatment temperature may be in a range of 710 °C to 800 °C, 720 °C to 800 °C, 730 °C to 800 °C, 740 °C to 800 °C, 750 °C to 800 °C, 700 °C to 780 °C, 700 °C to 760 °C, 700 °C to 750 °C, or 700 °C to 730 °C, but one or more embodiments are not limited thereto. The heat treatment temperature may include all ranges derived by selecting any two points in the above range.

According to an embodiment, a heat treatment time may be longer than a sintering time. For example, the heat treatment time may be in a range of 10 hours to 20 hours or 10 hours to 15 hours, but one or more embodiments are not limited thereto. The heat treatment time includes all ranges derived by selecting any two points within the above range.

Through the sintering, the growth of particles is induced simultaneously when a crystal structure of the lithium transition metal oxide particles is formed, thereby forming a single particle form. Thereafter, additional heat treatment may be performed as necessary to increase crystallinity, thereby obtaining lithium transition metal oxide particles having improved particle stability.

According to an embodiment, the lithium transition metal oxide particles prepared through the above-described method of preparing a positive electrode active material may be single particles. In addition, an average particle diameter of a lithium transition metal oxide may be in a range of 0.1 $\mu$m to 20 $\mu$m.

In addition, since the lithium transition metal oxide particles prepared through the method of preparing a positive electrode active material have a single particle form, there may be no particle breakage due to rolling during an electrode formation process, and a high-density active material layer may be formed, thereby improving an electrode density and also improving cycle characteristics by substituting a Na element into a lithium site and substituting a S element into an oxygen site in an LMR positive electrode active material.

According to another aspect, there is provided a positive electrode including the above-described positive electrode active material.

According to another aspect, there is provided a lithium secondary battery including the positive electrode, a negative electrode, and an electrolyte.

According to an embodiment, the electrolyte may be a liquid electrolyte, a semi-solid electrolyte or a solid electrolyte. The electrolyte is as defined below.

The positive electrode and the lithium secondary battery including the same may be manufactured in the following manner.

First, the positive electrode is prepared.

For example, a positive electrode active material composition in which the above-described positive electrode active material, a conductive material, a binder, and a solvent are mixed is prepared. The positive electrode active material composition is applied directly on a metal current collector to prepare a positive electrode plate. Alternatively, the positive electrode active material composition may be cast on a separate support, and then a film peeled off of the support may be laminated on a metal current collector to prepare the positive electrode plate. The positive electrode is not limited to the forms listed above and may have forms other than the above forms.

Examples of the conductive material may include graphite such as natural graphite or artificial graphite; carbon black; conductive tubes such as carbon nanotubes; a conductive whisker such as fluorocarbon, zinc oxide, or potassium titanate; a conductive metal oxide such as titanium oxide; and the like, but one or more embodiments are not limited thereto. Any material usable as a conductive material in the art may be used.

The binder may include a vinylidene fluoride/hexafluoropropylene copolymer, polyvinylidene fluoride (PVDF), polyacrylonitrile, polymethyl methacrylate, polytetrafluoroethylene (PTFE), a mixture thereof, or a styrene butadiene rubber-based polymer, but one or embodiments are not limited thereto. Any material usable as a binder in the art may be used. Other examples of the binder may include lithium salts, sodium salts, calcium salts, or Na salts of the above-described polymers.

The solvent may include N-methylpyrrolidone, acetone, or water, but one or more embodiments are not limited thereto. Any solvent usable in the art may be used.

The contents of the positive electrode active material, the conductive material, the binder, and the solvent are at a level commonly used in a lithium battery. According to the use and configuration of a lithium battery, at least one of the conductive material, the binder, and the solvent may be omitted.

Next, the negative electrode is prepared.

For example, a negative electrode active material composition is prepared by mixing a negative electrode active material, a conductive material, a binder, and a solvent. The negative electrode active material composition may be applied directly on a metal current collector having a thickness of 3 μm to 500 μm and dried to prepare a negative electrode plate. Alternatively, the negative electrode active material composition may be cast on a separate support, and then a film peeled off of the support may be laminated on a metal current collector to prepare the negative electrode plate.

A material of the negative electrode current collector is not particularly limited as long as the material has conductivity without causing a chemical change in a corresponding battery. For example, a copper, nickel, or copper, which is surface-treated with carbon, may be used.

As the negative electrode active material, any material usable as a negative electrode active material of a lithium battery in the art may be used. For example, the negative electrode active material may include at least one selected from a lithium metal, a metal alloyable with lithium, a transition metal oxide, a non-transition metal oxide, and a carbon-based material.

Examples of the metal alloyable with lithium may include Sn, Al, Ge, Pb, Bi, Sb, a Si-Y alloy (wherein Y is an alkali metal, an alkali earth metal, a Group 13 element, a Group 14 element, a transition metal, a rare earth element, or a combination thereof and is not Si), a Sn-Y alloy (wherein Y is an alkali metal, an alkali earth metal, a Group 13 element, a Group 14 element, a transition metal, a rare earth element, or a combination thereof and is not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, or Te.

For example, the transition metal oxide may be lithium titanium oxide, vanadium oxide, lithium vanadium oxide, or the like.

For example, the non-transition metal oxide may be $SnO_2$, $SiO_x$ (wherein $0<x<2$), or the like.

The carbon-based material may be crystalline carbon, amorphous carbon, or a mixture thereof. The crystalline carbon may include graphite such as natural graphite or artificial graphite having a non-shaped, plate-like, flake-like, spherical, or fibrous form. The amorphous carbon may be include soft carbon (carbon calcined at a low temperature), hard carbon, mesophase pitch carbide, a calcined coke, or the like.

The conductive material, the binder, and the solvent of the negative electrode active material composition may be the same as those of the positive electrode active material composition.

The contents of the negative electrode active material, the conductive material, the binder, and the solvent are at a level commonly used in a lithium battery. According to the use and configuration of a lithium battery, at least one of the conductive material, the binder, and the solvent may be omitted.

Next, a separator to be inserted between the positive electrode and the negative electrode is prepared.

As the separator, any separator commonly used in a lithium battery may be used. A separator having a low resistance to ion movement in an electrolyte and an excellent impregnation ability for an electrolyte. The separator may be a single film or a multi-layer film. For example, the separator may be formed of glass fiber, polyester, Teflon, polyethylene, polypropylene, PVDF, PTFE, or a combination thereof. The separator may be in the form of a non-woven fabric or a woven fabric. In addition, a mixed multilayer film such as a polyethylene/polypropylene two-layer separator, a polyethylene/polypropylene/polyethylene three-layer separator, or a polypropylene/polyethylene/polypropylene three-layer separator may be used. For example, a windable separator including polyethylene, polypropylene, or the like may be used in a lithium ion battery, and a separator having an excellent electrolyte impregnation ability may be used in a lithium ion polymer battery. For example, the separator may be prepared according to the following method.

A separator composition is prepared by mixing a polymer resin, a filler, and a solvent. The separator composition may be applied directly on an electrode and dried to form the separator. Alternatively, the separator composition may be cast on a support, and then a separator film peeled off of the support may be laminated on an electrode to form the separator.

A polymer resin used for preparing the separator is not limited, and any material used in a binding material of an electrode plate may be used. For example, the polymer resin may include a vinylidene fluoride/hexafluoropropylene copolymer, PVDF, polyacrylonitrile, polymethyl methacrylate, or a mixture thereof.

Next, the electrolyte is prepared.

For example, the electrolyte may be an organic electrolyte. Also, the electrolyte may be in a solid state. The electrolyte may include, for example, boron oxide, lithium oxynitride, or the like, but one or more embodiments are not limited thereto. Any material usable as a solid electrolyte in the art may be used. The solid electrolyte may be formed on the negative electrode through a method including sputtering.

For example, the organic electrolyte may be prepared by dissolving a lithium salt in an organic solvent.

As the organic solvent, any material usable as an organic solvent in the art may be used. Example of the solvent may include cyclic carbonates such as propylene carbonate, ethylene carbonate (EC), fluoroethylene carbonate (FEC), butylene carbonate, and vinylene carbonate (VC); chain carbonates such as dimethyl carbonate, diethyl carbonate (DEC), methyl ethyl carbonate, methylpropylcarbonate, ethyl propylcarbonate, methyl isopropylcarbonate, dipropylcarbonate, and dibutylcarbonate; esters such as methyl acetate, ethyl acetate, propyl acetate, methyl propionate, ethyl

propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide. These examples of the solvent may be used alone or in combination. For example, a solvent in which cyclic carbonate and chain carbonate are mixed may be used.

In addition, a gel polymer electrolyte in which a polymer electrolyte such as polyethylene oxide or polyacrylonitrile is impregnated with an electrolyte, or an inorganic solid electrolyte such as LiI, $Li_3N$, $Li_xGe_yP_zS_\alpha$, or $Li_xGe_yP_zS_\alpha X_\delta$ (wherein X=F, Cl, or Br) may be used.

As the lithium salt, any material usable as a lithium salt in the art may be used. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number), LiCl, LiI, or a mixture thereof.

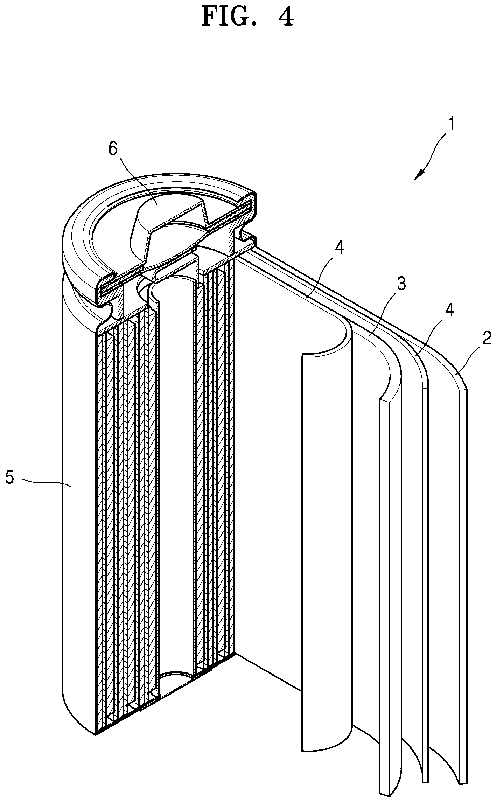

As shown in FIG. 4, a lithium battery 1 includes a positive electrode 3, a negative electrode 2, and a separator 4. The positive electrode 3, the negative electrode 2, and the separator 4 are wound or folded to be accommodated in a battery case 5. Subsequently, an organic electrolyte is injected into the battery case 5, and the battery case 5 is sealed with a cap assembly 6 to complete the lithium battery 1. The battery case 5 may a cylindrical type, a prismatic type, a pouch type, a coin type, or a thin-film type. For example, the lithium battery 1 may be a thin film battery. The lithium battery 1 may be a lithium ion battery.

The separator may be disposed between the positive electrode and the negative electrode to form a battery structure. The battery structure is stacked in a bi-cell structure and then impregnated in an organic electrolyte, and the obtained product is accommodated in a pouch and sealed, thereby completing a lithium ion polymer battery.

In addition, a plurality of battery structures may be stacked to form a battery pack, and such a battery pack may be used in any device requiring high capacity and high output power. For example, the battery pack may be used in laptop computers, smartphones, electric vehicles, and the like.

In addition, the lithium battery may have excellent lifespan characteristics and high-rate characteristics and thus may be used in electric vehicles (EVs). For example, the lithium battery may be used in hybrid vehicles such as plug-in hybrid electric vehicles (PHEVs). In addition, the lithium battery may be used in fields in which large amounts of power are required to be stored. For example, the lithium battery may be used in electric bicycles, power tools, power storage systems, and the like.

Hereinafter, the disclosure will be described in more detail with reference to the following Examples and Comparative Examples. However, Examples are for illustrative purposes only and are not intended to limit the scope of the disclosure.

(Preparation of positive electrode active material)

**Example 1**

1,000 g of $Ni_{0.35}Mn_{0.65}(OH)_2$, 792 g of $LiOH \cdot H_2O$, 13.76 g of $Na_2CO_3$, and 1.44 g of $(NH_4)_2SO_4$ were mechanically mixed for about 15 minutes. A mixed powder was synthesized through calcination at a temperature of 980 °C for 10 hours.

**Example 2**

1,000 g of $Ni_{0.35}Mn_{0.65}(OH)_2$, 792 g of $LiOH \cdot H_2O$, 13.76 g of $Na_2CO_3$, and 2.88 g of $(NH_4)_2SO_4$ were mechanically mixed for about 15 minutes. A mixed powder was synthesized through calcination at a temperature of 980 °C for 10 hours.

**Example 3**

1,000 g of $Ni_{0.35}Mn_{0.65}(OH)_2$, 792 g of $LiOH \cdot H_2O$, 27.52 g of $Na_2CO_3$, and 1.44 g of $(NH_4)_2SO_4$ were mechanically mixed for about 15 minutes. A mixed powder was synthesized through calcination at a temperature of 980 °C for 10 hours.

**Example 4**

1,000 g of $Ni_{0.35}Mn_{0.65}(OH)_2$, 792 g of $LiOH \cdot H_2O$, 27.52 g of $Na_2CO_3$, and 2.88 g of $(NH_4)_2SO_4$ were mechanically mixed for about 15 minutes. A mixed powder was synthesized through calcination at a temperature of 980 °C for 10 hours.

**Example 5**

1,000 g of $Ni_{0.35}Mn_{0.65}(OH)_2$, 820.3 g of $LiOH \cdot H_2O$, 13.76 g of $Na_2CO_3$, and 1.44 g of $(NH_4)_2SO_4$ were mechanically mixed for about 15 minutes. A mixed powder was synthesized through calcination at a temperature of 980 °C for 10 hours.

**Example 6**

1,000 g of $Ni_{0.35}Mn_{0.65}(OH)_2$, 820.3 g of $LiOH \cdot H_2O$, 27.52 g of $Na_2CO_3$, and 1.44 g of $(NH_4)_2SO_4$ were mechanically mixed for about 15 minutes. A mixed powder was synthesized through calcination at a temperature of 980 °C for 10 hours.

**Comparative Example 1**

1,000 g of $Ni_{0.35}Mn_{0.65}(OH)_2$, 792 g of $LiOH \cdot H_2O$, and 13.76 g of $Na_2CO_3$ were mechanically mixed for about 15 minutes. A mixed powder was synthesized through calcination at a temperature of 980 °C for 10 hours.

**Comparative Example 2**

1,000 g of $Ni_{0.35}Mn_{0.65}(OH)_2$, 820.3 g of $LiOH \cdot H_2O$, and 13.76 g of $Na_2CO_3$ were mechanically mixed for about 15 minutes. A mixed powder was synthesized through calcination at a temperature of 980 °C for 10 hours.

**Comparative Example 3**

1,000 g of $Ni_{0.35}Mn_{0.65}(OH)_2$, 792 g of $LiOH \cdot H_2O$, and 27.52 g of $Na_2CO_3$ were mechanically mixed for about 15 minutes. A mixed powder was synthesized through calcination at a temperature of 980 °C for 10 hours.

**Comparative Example 4**

1,000 g of $Ni_{0.35}Mn_{0.65}(OH)_2$, 792 g of $LiOH \cdot H_2O$, and 55.04 g of $Na_2CO_3$ were mechanically mixed for about 15 minutes. A mixed powder was synthesized through calcination at a temperature of 980 °C for 10 hours.

**Comparative Example 5**

1,000 g of $Ni_{0.35}Mn_{0.65}(OH)_2$, 792 g of $LiOH \cdot H_2O$, and 137.6 g of $Na_2CO_3$ were mechanically mixed for about 15 minutes. A mixed powder was synthesized through calcination at a temperature of 980 °C for 10 hours.

**Comparative Example 6**

1,000 g of $Ni_{0.35}Mn_{0.65}(OH)_2$, 792 g of $LiOH \cdot H_2O$, and 275.2 g of $Na_2CO_3$ were mechanically mixed for about 15 minutes. A mixed powder was synthesized through calcination at a temperature of 980 °C for 10 hours.

**Comparative Example 7**

1,000 g of $Ni_{0.35}Mn_{0.65}(OH)_2$, 792 g of $LiOH \cdot H_2O$, 55.04 g of $Na_2CO_3$, and 2.88 g of $(NH_4)_2SO_4$ were mechanically mixed for about 15 minutes. The mixed powder was synthesized by calcination at a temperature of 980 °C for 10 hours.

**Comparative Example 8**

1,000 g of $Ni_{0.35}Mn_{0.65}(OH)_2$, 792 g of $LiOH \cdot H_2O$, 137.6 g of $Na_2CO_3$, and 2.88 g of $(NH_4)_2SO_4$ were mechanically mixed for about 15 minutes. A mixed powder was synthesized through calcination at a temperature of 980 °C for 10 hours.

**Comparative Example 9**

1,000 g of $Ni_{0.35}Mn_{0.65}(OH)_2$, 792 g of $LiOH \cdot H_2O$, 275.2 g of $Na_2CO_3$, and 1.44 g of $(NH_4)_2SO_4$ were mechanically mixed for about 15 minutes. A mixed powder was synthesized through calcination at a temperature of 980 °C for 10 hours.

**Comparative Example 10**

1,000 g of $Ni_{0.35}Mn_{0.65}(OH)_2$, 792 g of $LiOH \cdot H_2O$, 275.2 g of $Na_2CO_3$, and 2.88 g of $(NH_4)_2SO_4$ are mechanically mixed for about 15 minutes. A mixed powder was synthesized through calcination at a temperature of 980 °C for 10 hours.

**Comparative Example 11**

1,000 g of $Ni_{0.35}Mn_{0.65}(OH)_2$, 820.3 g of $LiOH \cdot H_2O$, 550.4 g of $Na_2CO_3$, and 2.88 g of $(NH_4)_2SO_4$ are mechanically mixed for about 15 minutes. A mixed powder was synthesized through calcination at a temperature of 980 °C for 10 hours.

(Manufacturing of half-cell)

Example 7

A slurry was prepared by mixing a positive electrode active material, a conductive material, and a binder obtained in Example 1 at a weight ratio of 97:1:2. Here, carbon nanotubes (CNT) were used as the conductive material, and PVDF was dissolved in an N-methyl-2-pyrrolidone solvent and used as the binder.
The slurry was uniformly applied on an Al current collector and dried at a temperature of 110 °C for 2 hours to prepare a positive electrode. A loading level of an electrode plate was 11.0 mg/cm$^2$, and an electrode density thereof was 3.20 g/cc.
The prepared positive electrode was used as a working electrode, lithium foil was used as a counter electrode, and a liquid solution, in which, after 5 wt% of FEC and 0.5 wt% of VC were added to and mixed with a mixed solvent in which EC, ethyl methyl carbonate (EMC), and DEC were mixed at a volume ratio of 2:5:3, $LiPF_6$ as a lithium salt was added thereto to have a concentration of 1.3 M, was used to manufacture a CR2032 half-cell according to a commonly known process.

Examples 8 to 12

Half-cells were manufactured in the same manner as in Example 7, except that positive electrode active materials obtained in Examples 2 to 6 were used instead of the positive electrode active material obtained in Example 1.

Comparative Examples 12 to 22

Half-cells were manufactured in the same manner as in Example 7, except that positive electrode active materials obtained in Comparative Examples 1 to 11 were used instead of the positive electrode active material obtained in Example 1.

[Table 1]

|  | Composition |
|---|---|
| Comparative Example 1 | $Li_{1.40}Na_{0.005}Ni_{0.35}Mn_{0.65}O_{2.369}$ |
| Comparative Example 2 | $Li_{1.45}Na_{0.005}Ni_{0.35}Mn_{0.65}O_{2.369}$ |
| Comparative Example 3 | $Li_{1.40}Na_{0.01}Ni_{0.35}Mn_{0.65}O_{2.383}$ |
| Comparative Example 4 | $Li_{1.40}Na_{0.02}Ni_{0.35}Mn_{0.65}O_{2.387}$ |
| Comparative Example 5 | $Li_{1.40}Na_{0.05}Ni_{0.35}Mn_{0.65}O_{2.362}$ |
| Comparative Example 6 | $Li_{1.40}Na_{0.1}Ni_{0.35}Mn_{0.65}O_{2.362}$ |
| Comparative Example 7 | $Li_{1.40}Na_{0.015}Ni_{0.35}Mn_{0.65}O_{2.379}S_{0.01}$ |
| Comparative Example 8 | $Li_{1.40}Na_{0.05}Ni_{0.35}Mn_{0.65}O_{2.382}S_{0.01}$ |
| Comparative Example 9 | $Li_{1.40}Na_{0.1}Ni_{0.35}Mn_{0.65}O_{2.388}S_{0.005}$ |

(continued)

| | Composition |
|---|---|
| Comparative Example 10 | $Li_{1.40}Na_{0.1}Ni_{0.35}Mn_{0.65}O_{2.392}S_{0.01}$ |
| Comparative Example 11 | $Li_{1.45}Na_{0.2}Ni_{0.35}Mn_{0.65}O_{2.387}S_{0.01}$ |
| Example 1 | $Li_{1.40}Na_{0.005}Ni_{0.35}Mn_{0.65}O_{2.388}S_{0.005}$ |
| Example 2 | $L1_{1.40}N_{0.005}Ni_{0.35}Mn_{0.65}O_{2.392}S_{0.01}$ |
| Example 3 | $Li_{1.40}Na_{0.01}Ni_{0.35}Mn_{0.65}O_{2.374}S_{0.005}$ |
| Example 4 | $Li_{1.40}Na_{0.01}Ni_{0.35}Mn_{0.65}O_{2.362}S_{0.01}$ |
| Example 5 | $Li_{1.45}Na_{0.005}Ni_{0.35}Mn_{0.65}O_{2.468}S_{0.005}$ |
| Example 6 | $Li_{1.45}Na_{0.01}Ni_{0.35}Mn_{0.65}O_{2.379}S_{0.005}$ |

## Evaluation Example 1: Evaluation of composition of positive electrode active material

Inductively coupled plasma (ICP) analysis was performed the positive electrode active materials synthesized in Examples 1 to 6 and Comparative Examples 1 to 11 by using 700-ES (manufactured by Varian) equipment. Results thereof are shown in Table 2 below.

Referring to Table 2, as a result of the ICP analysis of Comparative Examples 1 to 11 and Examples 1 to 6, it can be seen that Na and S doping materials are introduced into a single particle LMR positive electrode active material to substitute lithium and oxygen in the active material so that Na and S contents are increased in the active material and the number of moles of lithium and oxygen are decreased. Even when the ICP analysis is performed in a vacuum, it is difficult to analyze a stoichiometric value of oxygen contained in a material due to the inflow of trace amounts of oxygen and carbon dioxide in the atmosphere.

[Table 2]

| | Li (mol%) | Na (mol%) | Ni (mol%) | Mn (mol%) | S (mol%) |
|---|---|---|---|---|---|
| Comparative Example 1 | 140 | 0.5 | 35 | 65 | - |
| Comparative Example 2 | 145 | 0.5 | 35 | 65 | - |
| Comparative Example 3 | 140 | 1 | 35 | 65 | - |
| Comparative Example 4 | 140 | 2 | 35 | 65 | - |
| Comparative Example 5 | 140 | 5 | 35 | 65 | - |
| Comparative Example 6 | 140 | 10 | 35 | 65 | - |
| Comparative Example 7 | 140 | 1.5 | 35 | 65 | 1 |
| Comparative Example 8 | 140 | 5 | 35 | 65 | 1 |
| Comparative Example 9 | 140 | 10 | 35 | 65 | 0.5 |
| Comparative Example 10 | 140 | 10 | 35 | 65 | 1 |
| Comparative Example 11 | 140 | 20 | 35 | 65 | 1 |
| Example 1 | 140 | 0.5 | 35 | 65 | 0.5 |
| Example 2 | 140 | 0.5 | 35 | 65 | 1 |
| Example 3 | 140 | 1 | 35 | 65 | 0.5 |
| Example 4 | 140 | 1 | 35 | 65 | 1 |
| Example 5 | 145 | 0.5 | 35 | 65 | 0.5 |
| Example 6 | 145 | 1 | 35 | 65 | 0.5 |

**Evaluation Example 2: Evaluation of appearance of positive electrode active material**

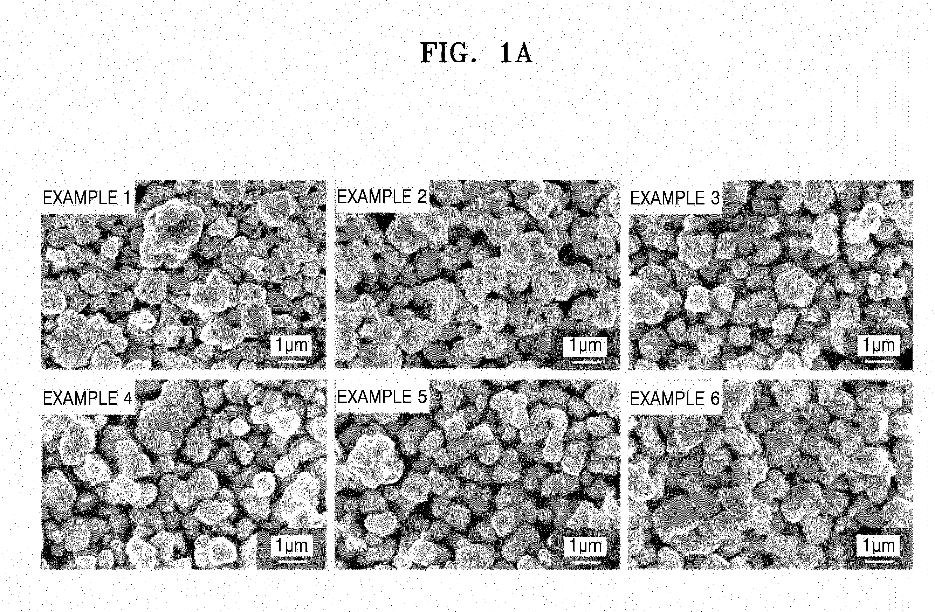

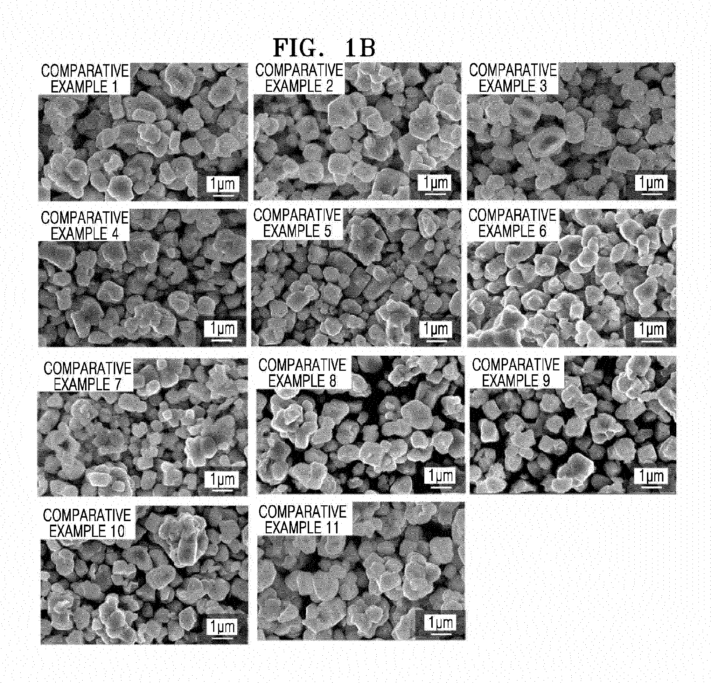

In order to evaluate the appearance of the positive electrode active materials obtained in Examples 1 to 6 and Comparative Examples 1 to 11, scanning electron microscope (SEM) images were captured. Results thereof are shown in FIGS. 1A and 1B. Referring to FIG. 1A, it was confirmed that active materials of Examples 1 to 6 had a single particle form, and there was no significant difference in sample surface or size even when Na and S doping materials were introduced.

**Evaluation Example 3: XRD evaluation of positive electrode active material**

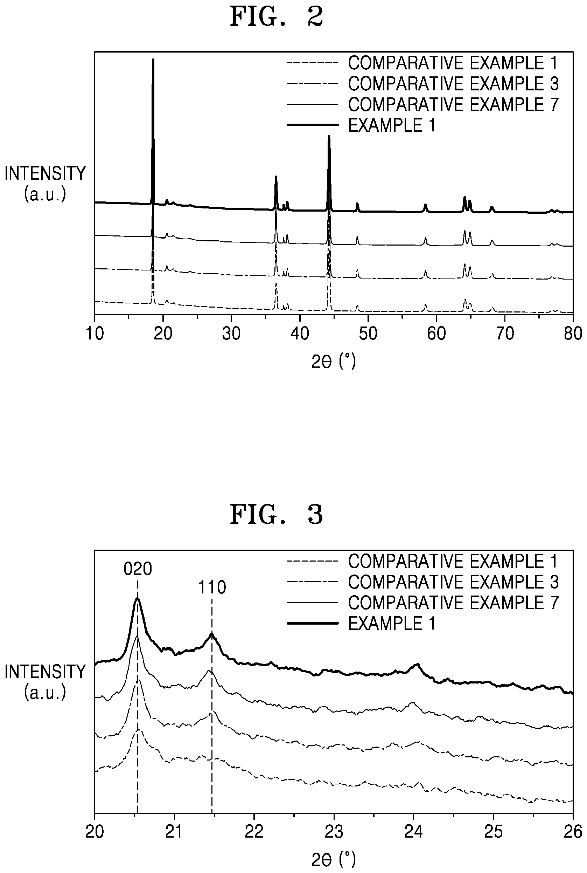

An X-ray diffraction spectrum graph of positive electrode active materials synthesized in Example 1 and Comparative Examples 1, 3, and 7 was obtained in a range of $2\theta=10°$ to $80°$ by using D/MAX 2500 V/PC (manufactured by Rigaku Corporation) equipment using Cu-Ka radiation. Results thereof are shown in FIG. 2.

Referring to FIG. 2, there was no significant difference between Comparative Examples 1, 3, and 7 and Example 1, but in Example 1, a characteristic peak was observed in a range of $2\theta=20°$ to $25°$. In order to quantitatively analyze the characteristic peak, an enlarged graph of the x-ray diffraction spectrum in the range of $2\theta=20°$ to $25°$ is shown in FIG. 3.

Referring to FIG. 3, a difference in FWHM at a (020) peak and a (110) peak between Comparative Examples 1, 3, and 7, and Example 1 was observed. A crystallite size ratio of (020) peak/(110) peak is calculated with reference to the contents described herein and shown in Table 3 below.

[Table 3]

|  | Crystallite size (nm) | | |
|---|---|---|---|
|  | (020) peak | (110) peak | (020) peak/(1 10) peak |
| Comparative Example 1 | 34.12 | 5.87 | 5.81 |
| Comparative Example 3 | 33.78 | 3.97 | 8.51 |
| Comparative Example 7 | 32.89 | 4.62 | 7.12 |
| Example 1 | 41.01 | 3.54 | 11.58 |

$L_{(crystallite\ size\ of\ 020\ peak)}/L_{(crystallite\ size\ of\ 110\ peak)}$ of Comparative Examples 1, 3, and 7 is a low value of less than 10, and $L_{(crystallite\ size\ of\ 020\ peak)}/L_{(crystallite\ size\ of\ 110\ peak)}$ of Example 1 is a high value of 11.58. This is due to a large crystallite size at a (020) peak. It is thought that Na and S are doped into a structure to contribute to the structural stability of a $Li_2MnO_3$ phase. A positive electrode active material having a relatively stable $Li_2MnO_3$ phase in a positive electrode active material structure has a positive effect on electrochemical performance.

**Evaluation Example 4: Evaluation of high-temperature lifespan**

After the half-cells manufactured in Examples 7 to 12 and Comparative Examples 12 to 22 were rested for 10 hours, the half-cells were charged up to 4.7 V at 0.1 C in a constant current (CC) mode and then were charged to a current corresponding to 0.05 C in a constant voltage (CV) mode. Next, the half-cells were discharged down to 2.5 V at a 0.1 C in a CV mode to complete a formation process.

Then, the half-cells were charged up to 4.6 V at 0.33 C in a CC mode at a high temperature (45 °C) and then were charged up to a current corresponding to 0.05 C in a CV mode. Next, the half-cells were discharged down to 2.5 V at 0.33 C in a CC mode. Such a process was repeated a total of 50 times.

Initial charge capacity and initial discharge capacity were measured, initial efficiency was calculated based on the Initial charge capacity and initial discharge capacity, and a capacity retention ratio of the half-cells after 50 times of charging/discharging cycles with respect to the initial discharge capacity were calculated and shown in Table 4.

[Table 4]

|  | Initial charge capacity (mAh/g) | Initial discharge capacity (mAh/g) | Initial efficiency (%) | Capacity retention ratio (%) after 50 times |
|---|---|---|---|---|
| Comparative Example 12 | 318.7 | 260.8 | 81.8 | 94.7 |

(continued)

| | Initial charge capacity (mAh/g) | Initial discharge capacity (mAh/g) | Initial efficiency (%) | Capacity retention ratio (%) after 50 times |
|---|---|---|---|---|
| Comparative Example 13 | 319.2 | 266.1 | 83.4 | 95.8 |
| Comparative Example 14 | 309.7 | 262.9 | 84.9 | 96.2 |
| Comparative Example 15 | 307.8 | 261.4 | 84.9 | 94.9 |
| Comparative Example 16 | 304.9 | 259.6 | 85.1 | 95.2 |
| Comparative Example 17 | 301.2 | 256.8 | 85.3 | 96.2 |
| Comparative Example 18 | 306.7 | 261.7 | 85.3 | 94.9 |
| Comparative Example 19 | 304.7 | 260.1 | 85.4 | 95.3 |
| Comparative Example 20 | 301.8 | 258.1 | 85.5 | 95.1 |
| Comparative Example 21 | 302.1 | 259.8 | 86.0 | 95.8 |
| Comparative Example 22 | 298.6 | 258.2 | 86.5 | 96.1 |
| Example 7 | 317.1 | 270.2 | 85.2 | 97.8 |
| Example 8 | 317.5 | 271.6 | 85.5 | 97.9 |
| Example 9 | 316.6 | 271.7 | 85.8 | 96.7 |
| Example 10 | 318.4 | 271.7 | 85.3 | 97.3 |
| Example 11 | 320.1 | 271.3 | 84.8 | 97.4 |
| Example 12 | 320.7 | 270.6 | 84.7 | 97.8 |

It was confirmed that the cells of Examples 7 to 12 had higher initial efficiency and higher discharge capacity as compared with Comparative Examples 12 to 17 lacking in S doping. In addition, it was confirmed that the cells of Examples 7 to 12 doped with Na and S at a molar ratio of less than 0.025 had higher initial charge capacity, higher initial discharge capacity, and higher capacity retention ratio as compared with Comparative Examples 18 to 22 doped with Na and S at a molar ratio of 0.025 or more. Therefore, in LMR-based lithium transition metal oxides, when Na and S were introduced in an appropriate amount (at a molar ratio of less than 0.025), initial charge/discharge capacity was increased, and lifespan characteristics was improved. While one or more embodiments of the disclosure have been described with reference to the drawings and Examples, the description merely illustrates, and it will be understood by those of ordinary skill in the art that various modifications and other equivalent embodiments are possible therefrom. Therefore, the protection scope of the disclosure should be defined by the appended claims.

**Claims**

1. A positive electrode active material comprising a lithium transition metal oxide,
   wherein, in the lithium transition metal oxide, a molar ratio of a manganese (Mn) element is 0.5 or more, and a sum of molar ratios of a sodium (Na) element and a sulfur (S) element satisfies 0<Na+S<0.025.

2. The positive electrode active material of claim 1, wherein an X-ray diffraction spectrum of the lithium transition metal oxide satisfies Expression 1 below:

$$\text{Expression 1}$$

$$10 \le \text{crystal grain (020)/crystal grain (110)} \le 15$$

wherein the crystal grain (110) refers to a crystallite size on a crystal plane (110), and
the crystal grain (020) refers to a crystallite size on a crystal plane (020).

3. The positive electrode active material of claim 1, wherein, in the lithium transition metal oxide, a molar ratio of a cobalt (Co) element is 0.01 or less.

4. The positive electrode active material of claim 1, wherein the molar ratio of the Mn element is greater than 0.5.

5. The positive electrode active material of claim 1, further comprising a nickel (Ni) element.

6. The positive electrode active material of claim 1, further comprising a lithium (Li) element,
wherein a molar ratio of the Li element is greater than 1.

7. The positive electrode active material of claim 1, wherein the lithium transition metal oxide is represented by Formula 1 below:

Formula 1 $\quad$ $Li_xNa_yNi_{1-a-b}Mn_aM_bO_{2+\alpha-\beta}S_\beta$

wherein, in Formula 1, M is at least one element selected from B, Zr, Sr, Y, Ba, W, Ti, Mg, Al, and Co, $1.3<x<1.5$, $0<y<0.015$, $0.5\le a<1$, $0\le b<0.1$, $0<\alpha<0.5$, and $0<\beta\le0.01$.

8. The positive electrode active material of claim 7, wherein, in Formula 1, M is B, Zr, Sr, Y, Ba, W, Ti, Mg, Al, or Co.

9. The positive electrode active material of claim 1, wherein the lithium transition metal oxide is represented by Formula 2 below:

Formula 2 $\quad$ $TLi_2MnO_3\cdot(1-T)LiNa_yNi_{1-a-b}Mn_aM_bO_{2-\beta}S_\beta$

wherein, in Formula 2, M is at least one element selected from B, Zr, Sr, Y, Ba, W, Ti, Mg, Al, and Co, $0.3<T<0.6$, $0<x<0.015$, $0.3<a<1$, $0<b\le0.25$, and $0<\beta\le0.025$.

10. The positive electrode active material of claim 1, wherein the lithium transition metal oxide is a single particle.

11. The positive electrode active material of claim 1, wherein the lithium transition metal oxide comprises an R-3m crystal and a monoclinic crystal.

12. The positive electrode active material of claim 1, wherein the lithium transition metal oxide has a layered crystal structure.

13. The positive electrode active material of claim 1, wherein the positive electrode active material comprises single particles of lithium transition metal oxide particles and secondary particles formed by aggregation of a plurality of the single particles of lithium transition metal oxide particles.

14. The positive electrode active material of claim 13, wherein, in the secondary particles, a surface of the lithium transition metal oxide particles or an interface between the plurality of lithium transition metal oxide particles comprises a coating layer containing a Na element, a S element, or Na and S elements.

15. The positive electrode active material of claim 1, wherein an average particle diameter of the positive electrode active material is in a range of 0.1 $\mu$m to 20 $\mu$m.

16. A method of preparing a positive electrode active material including a lithium transition metal oxide in which a molar ratio of a manganese (Mn) element is 0.5 or more and a sum of molar ratios of a sodium (Na) element and a sulfur (S) element satisfies $0 < Na+S < 0.025$, the method comprising:

preparing a transition metal oxide precursor in which a molar ratio of a manganese (Mn) element is 0.5 or more;
mixing the transition metal oxide precursor with a lithium (Li) precursor compound, a Na precursor compound, and a S precursor compound to obtain a lithium transition metal oxide precursor; and
sintering the lithium transition metal oxide precursor to obtain lithium transition metal oxide particles.

17. The method of claim 16, wherein the mixing is mechanical mixing in a solid phase.

18. The method of claim 16, wherein the sintering is heat treatment at a temperature of 900 °C to 1,100 °C for 8 hours to 12 hours.

19. A lithium secondary battery (1) comprising:

a positive electrode (3) comprising the positive electrode active material of any one of claims 1 to 14;
a negative electrode (2); and
an electrolyte.

20. The lithium secondary battery (1) of claim 19, wherein the electrolyte is a liquid electrolyte, a semi-solid electrolyte, or a solid electrolyte.

FIG. 1A

FIG. 1B

# FIG. 2

# FIG. 3

# FIG. 4

## INTERNATIONAL SEARCH REPORT

| | International application No. |
|---|---|
| | **PCT/KR2022/012638** |

| **A.** | **CLASSIFICATION OF SUBJECT MATTER** |
|---|---|

**H01M 4/525**(2010.01)i; **H01M 4/505**(2010.01)i; **H01M 10/052**(2010.01)i; **H01M 4/02**(2006.01)i

According to International Patent Classification (IPC) or to both national classification and IPC

| **B.** | **FIELDS SEARCHED** |
|---|---|

Minimum documentation searched (classification system followed by classification symbols)

H01M 4/525(2010.01); H01M 10/052(2010.01); H01M 10/0567(2010.01); H01M 4/36(2006.01); H01M 4/505(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이차전지(secondary battery), 양극 활물질(cathode active material), 망간(Mn), 나트륨(Na), 황(S), 몰비(molar ratio)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | KR 10-2020-0105391 A (SM LAB CO., LTD.) 07 September 2020 (2020-09-07)<br>See claims 1, 13, 16 and 20. | 1-20 |
| A | KR 10-2017-0065635 A (UMICORE et al.) 13 June 2017 (2017-06-13)<br>See claims 1-2. | 1-20 |
| A | KR 10-2015-0083363 A (LG CHEM, LTD.) 17 July 2015 (2015-07-17)<br>See entire document. | 1-20 |
| A | KR 10-1812269 B1 (LG CHEM, LTD.) 25 January 2018 (2018-01-25)<br>See entire document. | 1-20 |
| A | JP 2015-522921 A (LG CHEM, LTD.) 06 August 2015 (2015-08-06)<br>See entire document. | 1-20 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 November 2022** | **28 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 318 667 A1

## INTERNATIONAL SEARCH REPORT
### Information on patent family members

International application No.

**PCT/KR2022/012638**

| Patent document cited in search report | | | Publication date (day/month/year) | Patent family member(s) | | | Publication date (day/month/year) |
|---|---|---|---|---|---|---|---|
| KR | 10-2020-0105391 | A | 07 September 2020 | CN | 113412548 | A | 17 September 2021 |
| | | | | CN | 113424340 | A | 21 September 2021 |
| | | | | EP | 3933983 | A1 | 05 January 2022 |
| | | | | EP | 3933984 | A1 | 05 January 2022 |
| | | | | KR | 10-2020-0105390 | A | 07 September 2020 |
| | | | | KR | 10-2159701 | B1 | 25 September 2020 |
| | | | | KR | 10-2178780 | B1 | 13 November 2020 |
| KR | 10-2017-0065635 | A | 13 June 2017 | CN | 106795008 | A | 31 May 2017 |
| | | | | CN | 106795008 | B | 27 November 2018 |
| | | | | EP | 3204973 | A1 | 16 August 2017 |
| | | | | EP | 3204973 | A4 | 09 May 2018 |
| | | | | EP | 3204973 | B1 | 05 December 2018 |
| | | | | JP | 2017-536654 | A | 07 December 2017 |
| | | | | JP | 6482659 | B2 | 13 March 2019 |
| | | | | KR | 10-2004625 | B1 | 26 July 2019 |
| | | | | PL | 3204973 | T3 | 30 September 2019 |
| | | | | TW | 201620183 | A | 01 June 2016 |
| | | | | TW | I591883 | B | 11 July 2017 |
| | | | | US | 10411258 | B2 | 10 September 2019 |
| | | | | US | 11462735 | B2 | 04 October 2022 |
| | | | | US | 2017-0309909 | A1 | 26 October 2017 |
| | | | | US | 2019-0386303 | A1 | 19 December 2019 |
| | | | | WO | 2016-055911 | A1 | 14 April 2016 |
| KR | 10-2015-0083363 | A | 17 July 2015 | KR | 10-1865440 | B1 | 07 June 2018 |
| KR | 10-1812269 | B1 | 25 January 2018 | KR | 10-2016-0094064 | A | 09 August 2016 |
| JP | 2015-522921 | A | 06 August 2015 | CN | 100385100 | A | 18 December 2002 |
| | | | | CN | 104380505 | A | 25 February 2015 |
| | | | | CN | 104380505 | B | 25 August 2017 |
| | | | | EP | 2806485 | A1 | 26 November 2014 |
| | | | | EP | 2806485 | A4 | 11 March 2015 |
| | | | | EP | 2806485 | B1 | 17 August 2016 |
| | | | | JP | 5961911 | B2 | 03 August 2016 |
| | | | | KR | 10-1551523 | B1 | 08 September 2015 |
| | | | | KR | 10-2014-0018542 | A | 13 February 2014 |
| | | | | US | 2014-0291588 | A1 | 02 October 2014 |
| | | | | US | 9692053 | B2 | 27 June 2017 |
| | | | | WO | 2014-021686 | A1 | 06 February 2014 |

Form PCT/ISA/210 (patent family annex) (July 2022)